# EUROPÄISCHE PATENTSCHRIFT

(11) **EP 1 703 190 B1**
(45) Veröffentlichungstag und Bekanntmachung des Hinweises auf die Patenterteilung: **29.08.2007**
(21) Anmeldenummer: 05005477.4
(22) Anmeldetag: 14.03.2005
(51) Int. Cl.: F16L 37/091, F16L 21/03

(54) **Rohrverbinder für Rohre eines Deckenstrahlheizelements**
Pipe coupling for pipes of a ceiling radiator element
Raccord de tuyau pour tuyaux d'un élément d'un radiateur de plafond

(43) Veröffentlichungstag der Anmeldung: 20.09.2006
(73) Patentinhaber: Zehnder Verkaufs- und Verwaltungs AG, 5722 Gränichen (CH)
(72) Erfinder: Bredemann, Rolf, 31275 Lehrte (DE)
(74) Vertreter: Stenger, Watzke & Ring

(56) Entgegenhaltungen:
- EP-A- 0 961 085
- WO-A-20/04046602
- FR-A- 2 777 341
- US-A- 5 024 454

## Beschreibung

Die Erfindung betrifft einen Rohrverbinder für Rohre eines Deckenstrahlheizelements, mit einem Grundkörper, der zwei Endabschnitte und einen sich zwischen den beiden Endabschnitten entlang einer Mittelachse erstreckenden Strömungskanal aufweist, wobei die Endabschnitte jeweils stirnseitig eine Öffnung für das endseitige Einsetzen eines Rohres aufweisen.

Rohrverbinder der vorgenannten Art sind aus dem Stand der Technik an sich bekannt, so zum Beispiel aus der WO-A-2004/046602.

Vorbekannte Rohrverbinder bestehen aus einem Grundkörper einerseits sowie zwei Endabschnitten andererseits, die sich an den Grundkörper anschließen. Innerhalb des Grundkörpers erstreckt sich zwischen den beiden Endabschnitten entlang einer Mittelachse ein Strömungskanal. Die beiden Endabschnitte weisen jeweils stirnseitig eine Öffnung für das einendseitige Einsetzen eines Rohres auf. Die miteinander zu verbindenden Rohre können also jeweils endseitig in die korrespondierend ausgebildete Öffnung des jeweiligen Endabschnittes eingesteckt werden, wobei der im Grundkörper ausgebildete Strömungskanal den Übergangsbereich zwischen den beiden in den Rohrverbinder eingeführten Rohre schafft. Da die beiden miteinander zu verbindenden Rohre in die jeweils dafür vorgesehene Öffnung des Rohrverbinders eingesteckt werden, kann ein solcher Rohrverbinder auch als Steckverbinder bezeichnet werden.

Rohrverbinder der vorgenannten Art werden beispielsweise dazu verwendet, die Rohre zweier miteinander zu verbindender Deckenstrahlheizelemente aneinander anzuschließen.

Bei Deckenstrahlheizelementen handelt es sich um Heizelemente, die im Bereich der Decke eines Raumes angeordnet werden. Ein Deckenstrahlheizelement besteht aus einer wärmeleitfähigen Platte einerseits und einer Vielzahl von Rohren, die vorzugsweise parallel zueinander ausgerichtet auf der einen Seite der Platte angeordnet sind. Im montierten des Deckenstrahlheizelements befinden sich die einseitig auf der Platte des Deckenstrahlheizelements angeordneten Rohre zwischen der Platte des Deckenstrahlheizelements und der den Raum abschließenden Decke. Das durch die Rohre des Deckenstrahlheizelements geführte Heizmedium, beispielsweise Wasser, erwärmt die Rohre, die wiederum ihrerseits die Platte des Deckenstrahiheizelements erwärmen. Die auf diese Weise aufgewärmte Platte des Deckenstrahlheizelements gibt Wärme in Form von Strahlungswärme an die das Deckenstrahlheizelement umgebende Atmosphäre, das heißt die Raumluft ab.

Je nach Größe des zu erwärmenden Raumes bedarf es einer Vielzahl von Deckenstrahlheizelementen. Diese werden in aller Regel zur Schaffung eines geschlossenen Strömungskreislaufes für das Heizmedium in Reihe strömungstechnisch hintereinander geschaltet, so daß das Heizmedium der Reihe nach die Rohre der strömungstechnisch miteinander verbundenen Deckenstrahlheizelemente durchströmt. Zu diesem Zweck sind die Rohre benachbarter Deckenstrahlheizelemente heizmediumdicht miteinander zu verbinden. Dies kann beispielsweise dadurch geschehen, daß die einzelnen Rohre benachbarter Deckenstrahlheizelemente stirnseitig aneinander gesetzt und mittels Schweißen oder Löten verbunden werden. Von Nachteil bei dieser Ausgestaltung ist, daß zwei benachbarte Deckenstrahlheizelementplatten nicht direkt, das heißt ohne Belassung eines Spaltes einander nebengeordnet werden können, da es zum Verschweißen bzw. Verlöten der Rohre der Deckenstrahlheizelemente eines gewissen Montageraums bedarf, in den die für Verschweißen bzw. Verlöten der Rohre benötigten Werkzeuge eingeführt werden können. Dabei ist die notwendige Belassung eines Spaltes zwischen zwei benachbarten Deckenstrahlheizelementen insofern von Nachteil, als daß der Verbindungsbereich zwischen den Rohren für einen Betrachter sichtbar bleibt, denn ist dieser Bereich nicht durch die Platten der Deckenstrahlheizelemente abgedeckt.

Auch ist es aus dem Stand der Technik bekannt, die Rohre zweier Deckenstrahlheizelemente mittels Rohrverbinder aneinander anzuschließen. Bei den zu diesem Zweck eingesetzten Rohrverbindern handelt es sich um klemmende Rohrverbinder, die die beiden jeweils stirnseitig in den Rohrverbinder eingeschobenen endseitigen Abschnitte der zu verbindenden Rohre festklemmen. Um ein lagesicheres Verklemmen der endseitigen Rohrabschnitte zu bewirken, bedarf es entsprechender Werkzeuge, so daß auch bei der Verwendung von vorbekannten Rohrverbindern ein Montagespalt zwischen zwei benachbart angeordneten Deckenstrahlheizelementen nicht vermieden werden kann. Mithin stellt sich auch bei der Verwendung von aus Stand der Technik bekannten Rohrverbindern ein den optischen Gesamteindruck zweier miteinander verbundener Deckenstrahlheizelemente störender Montagespalt zwischen den Deckenstrahlheizelementen ein.

Ausgehend vom vorbeschriebenen Stand der Technik ist es deshalb die **Aufgabe** der Erfindung, unter Vermeidung der vorgenannten Nachteile einen Rohrverbinder zu schaffen, der es ermöglicht, die Rohre zweier Deckenstrahlheizelemente stirnseitig miteinander zu verbinden, und zwar derart, daß die Deckenstrahlheizelemente direkt, das heißt ohne Belassung eines Spaltes nebeneinander angeordnet werden können.

Zur **Lösung** dieser Aufgabe wird mit der Erfindung vorgeschlagen, daß innenseitig des einen, ersten Endabschnittes ausschließlich Dichtungsmittel und innenseitig des anderen, zweiten Endabschnittes ein Dichtungsmittel und ein Klemmring angeordnet sind.

Erfindungsgemäß verfügt nur der zweite Endabschnitt des Rohrverbinders über einen innenseitig angeordneten Klemmring. Innenseitig des anderen Endabschnittes, das heißt des ersten Endabschnittes sind ausschließlich Dichtungsmittel angeordnet. Ein Klemmring befindet sich innenseitig des ersten Endabschnittes nicht.

Im verbundenen Zustand zweier Rohre ist der Endabschnitt des einen Rohres, weicher in den Endabschnitt des Rohrverbinders eingeschoben ist, der innenseitig den Klemmring trägt, mittels des Klemmrings in axialer Richtung des Rohrverbinders gegenüber diesem festgelegt. Eine relative Verschiebung zwischen diesem Rohr und dem Rohrverbinder ist mittels des Klemmrings unterbunden. Der endseitige Abschnitt des anderen Rohres, welcher in den Endabschnitt des Rohrverbinders eingesteckt ist, der innenseitig ausschließlich Dichtungsmittel trägt, ist mangels Klemmring in seiner relativen Lage zum Rohrverbinder nicht gesichert.

Der erfindungsgemäße Rohrverbinder eignet sich insbesondere für die Verbindung von Rohren von Deckenstrahlheizelementen. Im montierten Zustand zweier benachbarter Deckenstrahlheizelemente sind die jeweiligen gegenüberliegenden Rohrendabschnitte der benachbarten Deckenstrahlheizelemente mittels jeweils eines Rohrverbinders miteinander verbunden. Die Deckenstrahlheizelemente selbst sind an der Decke eines Raumes angeordnet, das heißt mit dieser verankert, so daß eine relative Bewegung zwischen den benachbarten Deckenstrahlheizelementen nicht stattfinden kann. Zudem können die Platten der Deckenstrahlheizelemente miteinander verbunden, vorzugsweise verschraubt sein. Die Deckenstrahlheizelemente stützen sich auf diese Weise gegeneinander ab. Aufgrund dieser Anordnung der Deckenstrahlheizelemente sind die Rohre der Deckenstrahlheizelemente in ihrer relativen Lage zueinander fixiert. Aus diesem Grunde ist es ausreichend, wenn die zur Verbindung eingesetzten Rohrverbinder nur mittels ihres jeweiligen einen Endabschnittes, der den Klemmring trägt, gegenüber den Rohren der Deckenstrahlheizelemente festgelegt sind. Die Rohrverbinder dienen nämlich nicht dazu, eine relative Verschiebung der Deckenstrahlheizelemente zueinander zu unterbinden, denn ist dies bereits durch die Verankerung der Deckenstrahlheizelemente und/oder deren Verbindung untereinander erreicht, vielmehr dient der der Rohrverbinder dazu, eine relative Verschiebung der Rohrverbinder zu den jeweils mit dem Rohrverbinder verbundenen Rohren zu unterbinden. Aus diesem Grunde ist es ausreichend, nur bezüglich eines Endabschnittes der Rohrverbinder einen Klemmring vorzusehen. Für eine lagesichere Anordnung zweier benachbarter Deckenstrahlheizelemente bedarf es nicht eines weiteren Klemmrings im jeweiligen anderen Endabschnitt der Rohrverbinder. Die lagesichere Positionierung zweier benachbarter Deckenstrahlheizelemente wird vielmehr - wie gesagt - dadurch erreicht, daß die Deckenstrahlheizelemente ihrerseits mit der Raumdecke und/oder miteinander verbunden, vorzugsweise verschraubt verankert sind.

Die erfindungsgemäße Ausgestaltung der Rohrverbinder hat mit Blick auf die Verbindung der Rohre zweier benachbarter Deckenstrahlheizelemente im Unterschied zu den aus dem Stand der Technik bekannten Verbindungsarten im wesentlichen den Vorteil, daß die Rohre zweier benachbarter Deckenstrahlheizelemente stirnseitig miteinander verbunden werden können, und zwar derart, daß die Deckenstrahlheizelemente direkt, das heißt ohne Belassung eines Spaltes nebeneinander angeordnet werden können. Hierdurch wird ein insgesamt harmonisches und einheitliches optisches Erscheinungsbild geschaffen. Da nämlich die Deckenstrahlheizelemente ohne Belassung eines Spaltes direkt einander nebengeordnet werden können, bilden die Platten der Deckenstrahlheizelemente eine in sich geschlossene Fläche. In ihrer Gesamtheit decken die Platten der Deckenstrahlhiezelemente die Rohre der Deckenstrahlheizelemente vollständig ab, so daß diese bzw. Teile hiervon in Blickrichtung auf die benachbart angeordneten Deckenstrahtheizelemente nicht einsehbar sind.

Unter Verwendung erfindungsgemäßer Rohrverbinder lassen sich die Rohre zweier im endfertigen Zustand nebeneinander angeordneter Deckenstrahlheizelemente wie folgt miteinander verbinden, wobei zwei alternative Montagemöglichkeiten zur Verfügung stehen.

In einer ersten Montagevariante wird der eine der beiden im endfertigen Montagezustand nebeneinander angeordneten Deckenstrahlheizelemente zunächst vormontiert. Zu diesem Zweck werden auf die endseitigen Rohrabschnitte der Rohres dieses Deckenstrahlheizelements jeweils Rohrverbinder aufgesteckt, und zwar mit denjenigen Endabschnitten der Rohrverbinder voran, die innenseitig einen Klemmring tragen. Mittels entsprechender Werkzeuge werden die Klemmringe der Rohrverbinder festgeklemmt, so daß die Rohrverbinder lagesicher fixiert auf den jeweiligen Rohrendabschnitten der Rohre dieses Deckenstrahlheizelements angeordnet sind. Alsdann wird dieses Deckenstrahlheizelement bestimmungsgemäß an der Raumdecke verankert. Das zweite Deckenstrahlheizelement wird sodann mit seinen dem bereits verankerten Deckenstrahlheizelement zugewandten Rohrendabschnitten voran an das bereits verankerte Deckenstrahlheizelement herangeführt. Dabei werden die jeweiligen Rohrendabschnitte des noch nicht verankerten Deckenstrahlheizelements in die jeweiligen ersten Endabschnitte der am verankerten Deckenstrahlheizelement bereits vormontierten Rohrverbinder eingeschoben bzw. eingesteckt. Das noch nicht verankerte Deckenstrahlheizelement wird im weiteren bis an das bereits verankerte Deckenstrahlheizelement geführt, und zwar so weit, bis die beiden Platten der Deckenstrahiheizelemente direkt, das heißt ohne Belassung eines Spaltes aneinander liegen. Ist diese Position erreicht, so wird auch das zweite Deckenstrahlheizelement an der Raumdecke lagesicher fixiert, das heißt verankert

In einer alternativen Ausgestaltungsform der Erfindung werden Rohrverbinder mit Klemmringen eingesetzt, die selbstklemmend sind. Dabei kann die selbstklemmende Wirkung der Klemmringe beispielsweise dadurch ausgelöst werden, daß sie erwärmt werden, beispielsweise infolge einer ersten Inbetriebnahme der Deckenstrahlheizelemente Bei einer solchen Ausgestaltung der Rohrverbinder erfolgt die Montage zweier Deckenstrahlheizelemente wie folgt. Das erste Deckenstrahlheizelement wird bestimmungsgemäß an der Raumdecke angeordnet, das heißt mit dieser verankert. Alsdann werden auf die endseitigen Rohrabschnitte der Rohre dieses Deckenstrahlheizelements jeweils erfindungsgemäße Rohrverbinder aufgesteckt. Alsdann wird das zweite Deckenstrahlheizelement mit seinen endseitigen Rohrabschnitten voran an das bereits verankerte Deckenstrahlheizelement geführt, wobei die endseitigen Rohrabschnitte des noch nicht verankerten Deckenstrahlheizelements in die jeweiligen Rohrverbinder eingeführt werden. Das noch nicht verankerte Deckenstrahlheizelement wird so weit an das bereits verankerte Deckenstrahlheizelement herangeführt, bis die Platten der Deckenstrahlheizelemente direkt, das heißt ohne Belassung eines Spaltes nebeneinander liegen. Alsdann wird auch das zweite Deckenstrahlheizelement bestimmungsgemäß mit der Raumdecke verankert. Die so vormontierten Deckenstrahlheizelemente werden, nachdem sie an die dafür erforderlichen Zu- und Ablaufleitungen angeschlossen sind, in Betrieb genommen. Das daraufhin durch die Rohre und die Rohrverbinder strömende Heizmedium erwärmt die Rohrverbinder und die darin angeordneten Klemmringe, infolgedessen die Selbstklemmung der Klemmringe ausgelöst wird.

Selbstredend ist es auch möglich, die Deckenstrahlheizelemente komplett vorzumontieren, bevor diese bestimmungsgemäß angeordnet, das heißt an eine Raumdecke gehängt werden. Im Rahmen dieser Vormontage werden die Rohre der Deckenstrahlheizelemente unter Verwendung erfindungsgemäßer Rohrverbinder - wie vorstehend beschrieben - miteinander verbunden. Alsdann werden die Platten der Deckenstrahlheizelemente miteinander verbunden, vorzugsweise verschraubt. Die so vormontierten Deckenstrahlheizelemente können dann in ihrer Gesamtheit, das heißt als eine Deckenstrahlheizelement-Einrichtung endmontiert, das heißt bestimmungsgemäß an einer Raumdecke angeordnet werden.

Beiden vorbeschriebenen Montagevarianten weisen mit Blick auf den erfindungsgemäßen Rohrverbinder den Vorteil auf, daß es eines Montagespaltes zwischen zwei benachbarten Deckenstrahlheizelementen nicht bedarf, um die Rohrverbinder bestimmungsgemäß mit den Rohren der Deckenstrahlheizelemente zu verbinden. Dank des erfindungsgemäßen Rohrverbinders kann auf einen solchen Montagespalt vielmehr verzichtet werden, so daß benachbarte Deckenstrahlheizelemente direkt, das heißt ohne Belassung eines Spaltes nebeneinander angeordnet werden können.

Der erfindungsgemäße Rohrverbinder weist noch einen weiteren Vorteil auf. Da die Rohre zweier benachbarter Deckenstrahlheizelemente nicht starr miteinander verbunden sind, ist ein Dehnungsausgleich möglich, und zwar ohne daß hierdurch die Funktion der Deckenstrahlheizelemente beeinträchtigt würde. Dieser Dehnungsausgleich ist deshalb möglich, weil der eine Endabschnitt des Rohrverbinders nicht starr mit dem zugehörigen Rohrendabschnitt der über den Rohrverbinder miteinander gekoppelten Rohre verbunden ist. Vielmehr ist in gewissen Grenzen eine relative Verschiebung zwischen dem einen Endabschnitt des Rohrverbinders und dem in diesen Endabschnitt hineingeführten Rohrendabschnitt möglich. Dieser eine Endabschnitt des Rohrverbinders trägt innenseitig mehrere Dichtungsmittel, vorzugsweise zwei Dichtungsmittel in Form von O-Ringen, so daß eine funktionsgerechte Abdichtung zwischen Rohrverbinder einerseits und den von dem Rohrverbinder miteinander verbundenen Rohren andererseits sichergestellt ist.

Gemäß einem weiteren Merkmal der Erfindung ist im zweiten Endabschnitt des Rohrverbinders innenseitig des weiteren ein Haltering angeordnet. Dieser Haltering ist in Längsrichtung des zweiten Endabschnittes zwischen dem Dichtungsmittel einerseits und dem Klemmring andererseits angeordnet. Sinn und Zweck dieses Halterings ist es, den Klemmring gegenüber dem zweiten Endabschnitt festzulegen. Der Haltering ist zu diesem Zweck dem Klemmring kraftübertragend nebengeordnet. Der Haltering besteht aus Stahl, vorzugsweise aus Edelstahl, wohingegen der Klemmring aus einem Weichmetall, vorzugsweise Kupfer gebildet ist.

Der Klemmring kann in einer bevorzugten Ausgestaltungsform der Erfindung von einem aus Kunststoff bestehenden Ring getragen sein, wobei- sich dieser Ring gegenüber dem zweiten Endabschnitt des Rohrverbinders abstützt. Der aus Kunststoff bestehende Ring umgibt den Klemmring dabei nach Art eines Außenrings, weshalb der Klemmring auch als innenring bezeichnet werden kann. Der Außenring ist öffnungsseitig des zweiten Endabschnittes durch eine öffnungsseitig am zweiten Endabschnitt umlaufend angeordnete Körperkante gegen axiale Verschiebung gesichert. Dieser Körperkante gegenüberliegend ist der Außenring anderendseitig mittels des innenseitig im zweiten Endabschnitt angeordneten Halterings festgelegt, so daß insgesamt eine axiale Verschiebung des Außenrings gegenüber dem zweiten Endabschnitt unterbunden ist. Da der Außenring den Klemmring trägt, ist auch der klemmring gegenüber einer axialen Verschiebung relativ zum zweiten Endabschnitt gesichert.

Gemäß einem weiteren Merkmal der Erfindung ist innenseitig des zweiten Endabschnittes des weiteren ein Distanzring angeordnet, der sich in Längsrichtung des zweiten Endabschnittes zwischen dem dichtungsmittel einerseits und dem Haltering andererseits befindet. Mittels dieses Distanzringes ist der Haltering beabstandet vom Dichtungsmittel angeordnet, was einer etwaigen Beschädigung des Dichtungsmittels während der Montage vorbeugt.

Als Dichtungsmittel kommt vorzugsweise ein O-Ring zum Einsatz, und zwar sowohl bezüglich der Dichtungsmittel des ersten als auch des zweiten Endabschnittes des Rohrverbinders. Dabei können zur lagesicheren Fixierung der O-Ringe innenseitig in den jeweiligen Endabschnitten umlaufend ausgebildete Nuten vorgesehen sein, in welche die O-Ringe im Rahmen einer Montage eingesetzt werden.

Gemäß einem weiteren Merkmal der Erfindung ist vorgesehen, daß der Innendurchmesser des Klemmrings und der Innendurchmesser der Öffnung des ersten Endabschnittes gleich groß sind. Mit dieser Ausgestaltung wird dem Umstand Rechnung getragen, daß die Rohre zweier benachbarter Deckenstrahlheizelemente gleich große Außendurchmesser aufweisen, so daß der erfindungsgemäße Rohrverbinder wahlweise mit einem seiner beiden Endabschnitte voran sowohl auf die Rohre des einen Deckenstrahlheizelements als auch auf die Rohre des anderen Deckenstrahlheizelements aufgeschoben werden kann.

Gemäß einem weiteren Merkmal der Erfindung ist im Strömungskanal des Rohrverbinders ein innenseitig umlaufender Vorsprung angeordnet. Dieser Vorsprung dient als Anschlag, so daß ein zu Hineinschieben von Rohren in den Rohrverbinder sicher unterbunden ist. Zwecks sicherer Montage sind die vom Rohrverbinder zu verbindenden Rohre bis auf Anschlag in den Rohrverbinder einzuschieben, denn ist dann sichergestellt, daß die jeweiligen Rohrendabschnitte so weit in den Rohrverbinder eingeschoben sind, daß mittels der im Rohrverbinder angeordneten Dichtungsmittel eine bestimmungsgemäße Abdichtung zwischen Rohrverbinder einerseits und den in den Rohrverbinder eingeschobenen Rohrendabschnitten andererseits gegeben ist.

Es versteht sich von selbst, daß der erfindungsgemäße Rohrverbinder in seinen Abmessungen auf die miteinander zu verbindenden Rohre abgestimmt ist. In einer bevorzugten Ausführungsform ist vorgesehen, daß der Innendurchmesser des Klemmrings 10 mm bis 20 mm, vorzugsweise 15 mm ist. Die Erstreckung des Klemmverbinders in Längsrichtung beträgt 40 mm bis 60 mm, vorzugsweise 55 mm.

Weitere Merkmale und Vorteile der Erfindung ergeben sich aus der nachfolgenden Beschreibung anhand der Fign. Dabei zeigen
- Fig. 1: in einer schematischen Darstellung die Rückansicht zweier Deckenstrahlheizelemente, deren Rohre mittels Schweißen nach dem Stand der Technik verbunden sind;
- Fig. 2: einen erfindungsgemäßen Rohrverbinder in teilgeschnittener Seitenansicht;
- Fig.3: einen erfindungsgemäßen Rohrverbinder in dreidimensionaler Darstellung und
- Fig. 4: in einer schematischen Darstellung die Rückseite zweier Deckenstrahlheizelemente deren Rohre jeweils unter Verwendung eines erfindungsgemäßen Rohrverbinders miteinander verbunden sind.

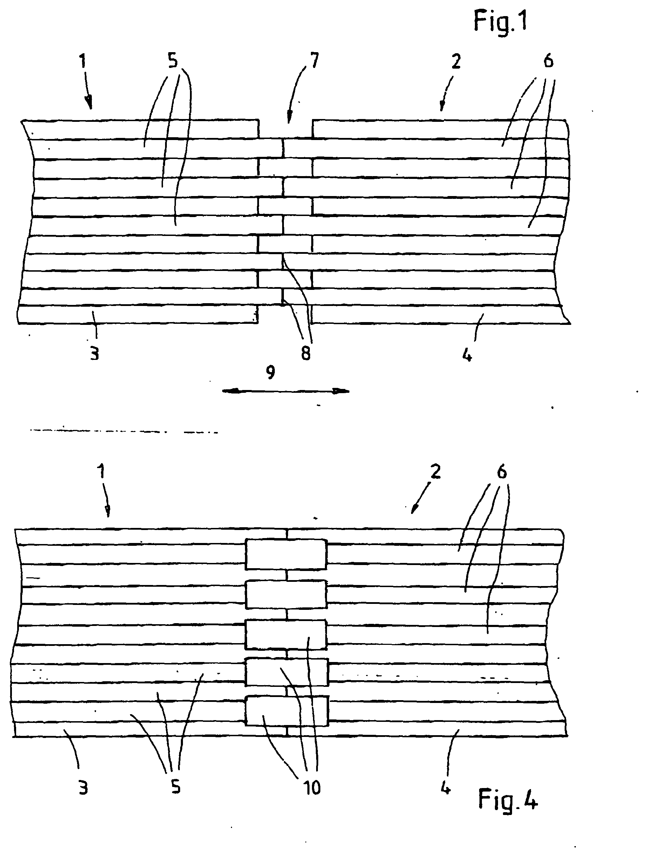

Fig. 1 zeigt in schematischer Darstellung die Rückseite zweier bestimmungsgemäß montierter Deckenstrahlheizelemente 1, 2, deren Rohre nach dem Stand der Technik verbunden sind, und zwar mittels Schweißen.

Das in Blattebene nach Fig. 1 linke Deckenstrahlheizelement 1 besteht aus einer Platte 3, die oberseitig eine Mehrzahl von parallel ausgerichteten Rohren 5 trägt. Im montierten und bestimmungsgemäßen Zustand befinden sich diese Rohre 5 zwischen Raumdecke einerseits und Platte 3 andererseits. Das in Blattebene nach Fig. 1 rechte Deckenstrahlheizelement ist in gleicher Weise aufgebaut und verfügt über eine Platte 4 sowie darauf parallel ausgerichtet angeordnete Rohre 6.

Im bestimmungsgemäß montierten Zustand bilden die Rohre 5, 6 der benachbart angeordneten Deckenstrahlheizelemente 1, 2 einen geschlossenen Strömungskreislauf, zu welchem Zweck die einander jeweils gegenüberliegenden Rohrendabschnitte der Rohre 5, 6 der benachbarten Deckenstrahlheizelemente 1, 2 strömungsdicht miteinander verbunden sind. Nach dem Stand der Technik sind die Rohre 5, 6 an ihrer jeweiligen Verbindungsstelle 8 miteinander verschweißt. Zwecks Werkzeugzugang zu den Verbindungsstellen 8 sind die Deckenstrahlheizelemente 1, 2 unter Belassung eines Spaltes 7, der als Montagespalt bezeichnet werden kann, einander nebengeordnet. Die zwangsläufige Belassung des Montagespaltes 7 wird als nachteilig empfunden, da in Blickrichtung auf eine bestimmungsgemäß montierte Deckenstrahlheizelementanordnung die Verbindungsstellen 8 für einen Betrachter durch den Spalt 7 hindurch sichtbar sind, was den optischen Gesamteindruck der Deckenstrahlheizelementanordnung stört.

Um dieses Problem zu überwinden, wird mit der Erfindung die Verwendung eines Rohrverbinders 10 vorgeschlagen, wie er in den nachfolgenden Figuren beschrieben ist.

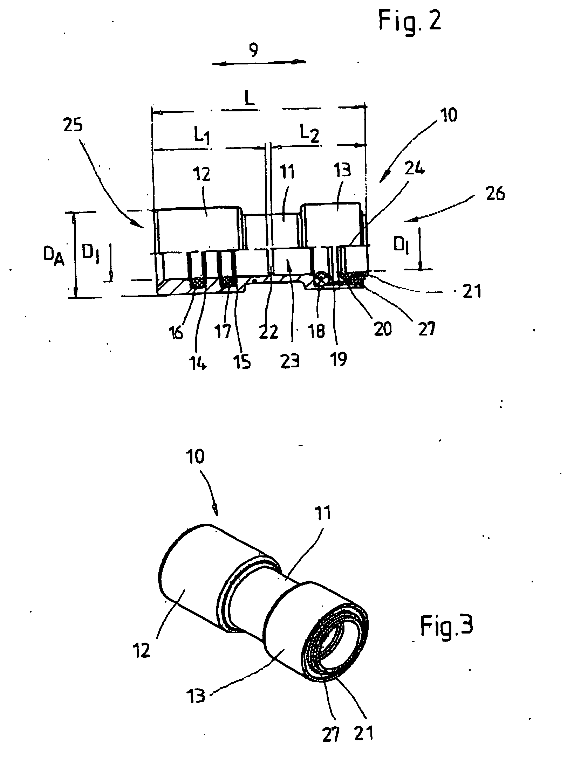

Fig. 2 zeigt den erfindungsgemäßen Rohrverbinder 10 in einer teilgeschnittenen Seitenansicht. In Fig. 3 ist der erfindungsgemäße Rohrverbinder 10 in einer perspektivischen Darstellung gezeigt.

Wie den Fign. 2 und 3 zu entnehmen ist, besteht der Rohrverbinder 10 aus einem Grundkörper 11 und zwei daran angeordneten Endabschnitten 12, 13, wobei der in Zeichnungsebene nach Fig. 2 linke Endabschnitt 12 als erster Endabschnitt und der in Zeichnungsebene nach Fig. 2 rechte Endabschnitt 13 als zweiter Endabschnitt bezeichnet sind. Zwischen den beiden Endabschnitten 12, 13 erstreckt sich entlang einer Mittelachse 24 ein Strömungskanal 23.

Die beiden Endabschnitte 12, 13 weisen jeweils stirnseitig eine Öffnung 25 bzw. 26 für das endseitige Einsetzen eines Rohres 5, 6 auf, wie dies anhand von Fig. 4, die im weiteren noch näher beschrieben werden wird, zu erkennen ist.

Innenseitig des einen, ersten Endabschnittes 12 sind ausschließlich Dichtungsmittel in Form von O-Ringen 16, 17 angeordnet. Diese O-Ringe 16, 17 werden jeweils von einer innenseitig im ersten Endabschnitt 12 umlaufend ausgebildeten Nut 14, 15 lagesicher gehalten.

Innenseitig des anderen, zweiten Endabschnittes 13 sind ein Dichtungsmittel in Form eines O-Rings 18 und ein Klemmring 21 angeordnet. Der Klemmring 21 ist mittels eines Halterings 20 festgelegt. Dabei befindet sich der Haltering 20 in Längsrichtung 9 zwischen dem O-Ring 18 und dem Klemmring 21. Der Klemmring 21 wird von einem Ring 27 abgestützt, der seinerseits in den zweiten Endabschnitt 13 eingesetzt ist. Der Ring 27, der mit Blick auf den Klemmring 21 auch als Außenring bezeichnet werden kann, ist einendseitig durch den Haltering 20 und anderendseitig durch einen am zweiten Endabschnitt 13 umlaufend ausgebildeten Vorsprung festgelegt. Eine relative Verschiebung des Rings 27 und damit auch des Klemmrings 21 gegenüber dem zweiten Endabschnitt 13 ist so unterbunden.

Innenseitig des zweiten Endabschnittes 13 befindet sich des weiteren ein Distanzring 19, der in Längsrichtung 9 des zweiten Endabschnittes 13 zwischen dem O-Ring 18 einerseits und dem Haltering 20 andererseits angeordnet ist. Mittels dieses Distanzrings 19 ist der Haltering 20 beabstandet vom O-Ring 18 angeordnet, was einer Beschädigung des O-Rings 18 während einer Montage des Rohrverbinders 10 vorbeugt.

Sowohl der Distanzring 19 als auch der Ring 27 bestehen vorzugsweise aus Kunststoff. Der Klemmring 21 besteht vorzugsweise aus Kupfer. Der Haltering 20 besteht vorzugsweise aus Edelstahl.

Im Strömungskanal 23 ist innenseitig ein umlaufender Vorsprung 22 angeordnet, der als Anschlag dient. Endseitig in den Rohrverbinder 10 einzuführende Rohre können bis auf Anschlag an diesen Vorsprung 22 in den Rohrverbinder 10 eingesteckt werden.

Der in den Fign. 2 und 3 beispielhaft dargestellte Rohrverbinder 10 weist eine Länge von L = 55 mm auf. Die Länge des ersten Endabschnittes 12 beträgt L₁ = 30 mm und der zweite Endabschnitt 13 verfügt über eine Erstreckung in Längsrichtung 9 von L₂ = 25 mm. Der Rohrverbinder 10 weist eine im Querschnitt kreisförmige Kontur auf, wie insbesondere Fig. 3 erkennen läßt, wobei der Außendurchmesser D_{A} beider Endabschnitte 12, 13 24 mm beträgt. Der Innendurchmesser Dₗ sowohl der Öffnung 25 des ersten Endabschnittes 12 als auch des Klemmrings 21 beträgt 15 mm.

Von entscheidender Bedeutung für die Erfindung ist, daß nur innenseitig des zweiten Endabschnittes 13 ein Klemmring 21 angeordnet ist. Der erste Endabschnitt 12 verfügt hingegen ausschließlich über Dichtungsmittel 16, 17. Ein Klemmring ist im ersten Endabschnitt 12 nicht angeordnet.

Fig. 4 zeigt in einer schematischen Darstellung die Rückseite zweier Deckenstrahlheizelemente 1, 2, deren Rohre jeweils mittels eines Rohrverbinders 10 nach der Erfindung miteinander verbunden sind.

Die Deckenstrahlheizelemente 1, 2 bestehen, wie bereits schon anhand von Fig. 1 beschrieben, jeweils aus einer Platte 3, 4 sowie auf den Platten 3, 4 jeweils angeordneten Rohren 5, 6. Die Rohre 5, 6 sind endseitig jeweils mittels eines Rohrverbinders 10 nach der Erfindung strömungsdicht miteinander verbunden. Dabei hat die Verwendung der erfindungsgemäßen Rohrverbinder 10 den Vorteil, daß die Deckenstrahlheizelemente 1, 2 direkt; das heißt ohne Belassung eines Spaltes nebeneinander angeordnet werden können. Auf diese Weise wird ein in Draufsicht auf die Vorderseite der Deckenstrahlheizelementeanordnung optisch harmonischer Eindruck geschaffen, denn sind anders als aus dem Stand der Technik die Verbindungsstellen zwischen den einzelnen Rohren 5, 6 für einen Betrachter nicht sichtbar, denn sind sie durch die direkt aneinander liegenden Platten 3, 4 der Deckenstrahlheizelemente 1, 2 abgedeckt.

Unter Verwendung des erfindungsgemäßen Rohrverbinders 10 können die Deckenstrahlheizelemente 1, 2 deshalb direkt, das heißt ohne Belassung eines Spaltes nebeneinander angeordnet werden, Weil es eines Montagespaltes zur bestimmungsgemäßen Verbindung der Rohre 5, 6 nicht bedarf. Die Rohrverbinder 10 werden in einfacher Weise auf die jeweiligen Rohrendabschnitte des einen Deckenstrahlhelzelements aufgeschoben, welches Deckenstrahlheizelement alsdann bestimmungsgemäß an einer Raumdecke angeordnet, das heißt mit dieser verankert wird. Das andere, noch nicht verankerte Deckenstrahlheizelement wird alsdann mit seinen dem bereits verankerten Deckenstrahlheizelement zugewandten Rohrendabschnitten an dieses herangeführt, wobei die jeweiligen Rohrendabschnitte in die Öffnungen der jeweiligen Rohrverbinder 10 eingesteckt werden. Das noch nicht verankerte Deckenstrahlheizelement wird dabei so weit an das bereits verankerte Deckenstrahlheizelement herangeführt, bis die Platten der Deckenstrahlheizelemente direkt, das heißt ohne Belassung eines Spaltes nebeneinander liegen. Alsdann wird auch das zweite, noch nicht verankerte Deckenstrahlheizelement bestimmungsgemäß an der Raumdecke angeordnet, das heißt mit dieser verankert. Der in den Rohrverbindern 10 jeweils angeordnete Klemmring ist vorzugsweise als selbstklemmender Klemmring ausgebildet, dessen Klemmwirkung beispielsweise dadurch ausgelöst werden kann, daß er infolge einer ersten Inbetriebnahme der Deckenstrahlheizelemente erwärmt wird. Der Klemmring sorgt dabei dafür, daß der Rohrverbinder 10 lagesicher gehalten wird, das heißt eine relative Verschiebung des Rohrverbinders gegenüber den von ihm miteinander verbundenen Rohren nicht möglich ist. Eine lagesichere Fixierung der Deckenstrahlheizelemente zueinander wird über die Verankerung derselben mit der Raumdecke erreicht.

### Bezugszeichenliste

- 1: Deckenstrahlheizelement
- 2: Deckenstrahlheizelement
- 3: Platte
- 4: Platte
- 5: Rohr
- 6: Rohr
- 7: Spalt
- 8: Verbindungsstelle
- 9: Längsrichtung
- 10: Rohrverbinder
- 11: Grundkörper
- 12: erster Endabschnitt
- 13: zweiter Endabschnitt
- 14: Nut
- 15: Nut
- 16: O-Ring
- 17: O-Ring
- 18: O-Ring
- 19: Distanzring
- 20: Haltering
- 21: Klemmring
- 22: Vorsprung
- 23: Strömungskanal
- 24: Mittelachse
- 25: Öffnung
- 26: Öffnung
- 27: Ring
- L: Länge Rohrverbinder
- L₁: Länge erster Endabschnitt
- L₂: Länge zweiter Endabschnitt
- D_{A}: Außendurchmesser
- Dₗ: Innendurchmesser

## Patentansprüche

1. Rohrverbinder für Rohre (5, 6) eines Deckenstrahlheizelements (1, 2), mit einem Grundkörper (11), der zwei Endabschnitte (12, 13) und einen sich zwischen den beiden Endabschnitten (12, 13) entlang einer Mittelachse (24) erstreckenden Strömungskanal (23) aufweist, wobei die Endabschnitte (12, 13) jeweils stirnseitig eine Öffnung (25, 26) für das endseitige Einsetzen eines Rohres (5, 6) aufweisen,
**dadurch gekennzeichnet,**
**daß** innenseitig des einen, ersten Endabschnittes (12) ausschließlich Dichtungsmittel und innenseitig des anderen, zweiten Endabschnittes (13) ein Dichtungsmittel (18) und ein Klemmring (21) angeordnet sind.

2. Rohrverbinder nach Anspruch 1, **dadurch gekennzeichnet, daß** innenseitig des zweiten Endabschnittes (13) des weiteren ein Haltering (20) angeordnet ist.

3. Rohrverbinder nach Anspruch 2, **dadurch gekennzeichnet, daß** der Haltering (20) in Längsrichtung (9) des zweiten Endabschnittes (13) zwischen dem Dichtungsmittel (18) einerseits und dem Klemmring (21) andererseits angeordnet ist.

4. Rohrverbinder nach Anspruch 2 oder 3, **dadurch gekennzeichnet, daß** der Haltering (20) den Klemmring (21) gegenüber dem zweiten Endabschnitt (13) festlegt.

5. Rohrverbinder nach einem der vorhergehenden Ansprüche, **dadurch gekennzeichnet, daß** innenseitig des zweiten Endabschnittes (13) des weiteren ein Distanzring (19) angeordnet ist, der in Längsrichtung (9) des zweiten Endabschnittes (13) zwischen dem Dichtungsmittel (18) einerseits und dem Haltering (20) andererseits angeordnet ist.

6. Rohrverbinder nach einem der vorhergehenden Ansprüche, **dadurch gekennzeichnet, daß** das Dichtungsmittel ein O-Ring ist.

7. Rohrverbinder nach einem der vorhergehenden Ansprüche, **dadurch gekennzeichnet, daß** der Haltering (20) in eine innenseitig des zweiten Endabschnittes umlaufend ausgebildete Nut eingesetzt ist.

8. Rohrverbinder nach einem der vorhergehenden Ansprüche, **dadurch gekennzeichnet, daß** der Haltering (20) und der Klemmring (21) kraftübertragend einander nebengeordnet sind.

9. Rohrverbinder nach einem der vorhergehenden Ansprüche, **dadurch gekennzeichnet, daß** der Haltering (20) aus Stahl, vorzugsweise aus Edelstahl besteht.

10. Rohrverbinder nach einem der vorhergehenden Ansprüche, **dadurch gekennzeichnet, daß** der Klemmring (21) aus einem Weichmetall, vorzugsweise aus Kupfer besteht.

11. Rohrverbinder nach einem der vorhergehenden Ansprüche, **dadurch gekennzeichnet, daß** der Klemmring (21) selbstklemmend ist.

12. Rohrverbinder nach einem der vorhergehenden Ansprüche, **dadurch gekennzeichnet, daß** der Innendurchmesser (Dₗ) des Klemmrings (21) und der Innendurchmesser (Dₗ) der Öffnung (25) des ersten Endabschnittes (12) gleich groß sind.

13. Rohrverbinder nach einem der vorhergehenden Ansprüche, **dadurch gekennzeichnet, daß** die Innendurchmesser (D₁) von Distanz- (19), Halte- (20) und Klemmring (21) gleich groß sind.

14. Rohrverbinder nach einem der vorhergehenden Ansprüche, **dadurch gekennzeichnet, daß** im Strömungskanal (23) ein innenseitig umlaufender Vorsprung (22) angeordnet ist.

15. Rohrverbinder nach einem der vorhergehenden Ansprüche, **dadurch gekennzeichnet, daß** der Innendurchmesser (Dₗ) des Klemmrings (21) 10 mm bis 20 mm, vorzugsweise 15 mm ist.

16. Rohrverbinder nach einem der vorhergehenden Ansprüche, **gekennzeichnet durch** eine Erstreckung (L) in Längsrichtung (9) von 40 mm bis 60 mm, vorzugsweise von 55 mm.

## Claims

1. A pipe coupling for pipes (5, 6) of a ceiling radiant-heating element (1, 2) with a base body (11) that has two end sections (12, 13) and a flow channel (23) extending along a central axis (24) between the two end sections (12, 13), whereby the end sections (12, 13), respectively, have a face end opening (25, 26) for the insertion of the end side of a pipe (5, 6),
**characterised in that**,
arranged in the interior of one, first end section (12) is only a sealing means, and arranged in the interior of the other, second end section (13) is a sealing means (18) and a clamping ring (21).

2. A pipe coupling according to claim 1, **characterised in that** additionally, a retaining ring (20) is arranged inside the second end section (13).

3. A pipe coupling according to claim 2, **characterised in that** the retaining ring (20) is arranged in the longitudinal direction (9) of the second end section (13) between the sealing means (18) on one side, and the clamping ring (21) on the other side.

4. A pipe coupling according to claim 2 or 3, **characterised in that** the retaining ring (20) fixes the clamping ring (21) relative to the second end section (13).

5. A pipe coupling according to one of the preceding claims, **characterised in that** additionally, a spacer ring (19) is arranged on the interior of the second end section (13), which spacer ring is arranged in the longitudinal direction (9) of the second end section (13) between the sealing means (18) on one side and the retaining ring (20) on the other side.

6. A pipe coupling according to one of the preceding claims, **characterised in that** the sealing means is an O-ring.

7. A pipe coupling according to one of the preceding claims, **characterised in that** the retaining ring (20) is inserted into a circumferentially formed groove on the inside of the second end section.

8. A pipe coupling according to one of the preceding claims, **characterised in that** the retaining ring (20) and the clamping ring (21) are arranged next to each other so as to transfer forces.

9. A pipe coupling according to one of the preceding claims, **characterised in that** the retaining ring (20) is composed of steel, preferably stainless steel.

10. A pipe coupling according to one of the preceding claims, **characterised in that** the retaining ring (21) is composed of a soft metal, preferably copper.

11. A pipe coupling according to one of the preceding claims, **characterised in that** the clamping ring (21) is self-clamping.

12. A pipe coupling according to one of the preceding claims, **characterised in that** the inner diameter (D_{I}) of the clamping ring (21) and the inner diameter (D_{I}) of the opening (25) of the first end section (12) are the same size.

13. A pipe coupling according to one of the preceding claims, **characterised in that** the inner diameter (D_{I}) of the spacer ring (19), retaining ring (20), and the clamping ring (21) are of the same size.

14. A pipe coupling according to one of the preceding claims, **characterised in that** a circumferential projection (22) is arranged inside the flow channel (23).

15. A pipe coupling according to one of the preceding claims, **characterised in that** the inner diameter (D_{I}) of the clamping ring (21) is 10 mm to 20 mm, preferably 15 mm.

16. A pipe coupling according to one of the preceding claims, **characterised by** an extent (L) in the longitudinal direction (9) of 40 mm to 60 mm, preferably 55 mm.

## Revendications

1. Raccord de tuyaux (5, 6) pour des tuyaux d'un élément de radiateur de plafond (1, 2), avec un corps de base (11) comprenant deux parties d'extrémité (12, 13) et un canal d'écoulement (23) s'étendant entre les deux parties d'extrémité (12, 13) le long d'un axe médian (24), les parties d'extrémité (12, 13) possédant chacune sur sa face d'extrémité une ouverture (25, 26) pour l'introduction à l'extrémité d'un tuyau (5, 6),
**caractérisé en ce qu'**il est prévu exclusivement des moyens d'étanchéité sur la face intérieure d'une première partie d'extrémité (12) et un moyen d'étanchéité (18) et une bague de serrage (21) sur la face intérieure de la deuxième partie d'extrémité (13).

2. Raccord de tuyaux selon la revendication 1, **caractérisé en ce qu'**il est prévu en outre une bague de maintien (20) sur la face intérieure de la deuxième parties d'extrémité (13).

3. Raccord de tuyaux selon la revendication 2, **caractérisé en ce que** la bague de maintien (20) est disposée dans le sens longitudinal (9) de la deuxième partie d'extrémité (13) entre l'élément d'étanchéité (18) d'une part et la bague de serrage (21) d'autre part.

4. Raccord de tuyaux selon la revendication 2 ou 3, **caractérisé en ce que** la bague de maintien (20) maintient fixement la bague de serrage (21) sur de la deuxième partie d'extrémité (13).

5. Raccord de tuyaux selon l'une des revendications précédentes, **caractérisé en ce qu'**il est prévu en outre sur la face intérieure de la deuxième partie d'extrémité (13) une bague d'écartement (19) qui est disposée dans le sens longitudinal (9) de la deuxième partie d'extrémité (13) entre l'élément d'étanchéité (18) d'une part et la bague de maintien (20) d'autre part.

6. Raccord de tuyaux selon l'une des revendications précédentes, **caractérisé en ce que** l'élément d'étanchéité est un joint torique.

7. Raccord de tuyaux selon l'une des revendications précédentes, **caractérisé en ce que** la bague de maintien (20) est introduite dans une gorge continue formée sur la face intérieure de la deuxième partie d'extrémité.

8. Raccord de tuyaux selon l'une des revendications précédentes, **caractérisé en ce que** la bague de maintien (20) et la bague de serrage (21) sont juxtaposées en vue d'une transmission de forces.

9. Raccord de tuyaux selon l'une des revendications précédentes, **caractérisé en ce que** la bague de maintien (20) est faite d'acier, de préférence d'acier inoxydable.

10. Raccord de tuyaux selon l'une des revendications précédentes, **caractérisé en ce que** la bague de serrage (21) est faite d'un métal mou, de préférence de cuivre.

11. Raccord de tuyaux selon l'une des revendications précédentes, **caractérisé en ce que** la bague de serrage (21) est auto-serrante.

12. Raccord de tuyaux selon l'une des revendications précédentes, **caractérisé en ce que** le diamètre intérieur (D_{I}) de la bague de serrage (21) et le diamètre intérieur (D₁) de l'ouverture (25) de la première partie d'extrémité (12) sont égaux.

13. Raccord de tuyaux selon l'une des revendications précédentes, **caractérisé en ce que** les diamètres intérieurs (D_{I}) des bagues d'écartement (19), de maintien (20) et de serrage (21) sont égaux.

14. Raccord de tuyaux selon l'une des revendications précédentes, **caractérisé en ce qu'**il est prévu dans le canal d'écoulement (23) une saillie (22) faisant le tour de la face intérieure.

15. Raccord de tuyaux selon l'une des revendications précédentes, **caractérisé en ce que** le diamètre intérieur (D_{I}) de la bague de serrage (21) est de 10 mm à 20 mm, de préférence de 15 mm.

16. Raccord de tuyaux selon l'une des revendications précédentes, **caractérisé en ce que** son étendue (L) dans le sens longitudinal (9) est de 40 mm à 60 mm, de préférence de 55 mm.
